Europäisches Patentamt

**European Patent Office**

Office européen des brevets

(11) Publication number: **0 188 991**
**A1**

## EUROPEAN PATENT APPLICATION

(21) Application number: **85630233.6**

(22) Date of filing: **18.12.85**

(51) Int. Cl.⁴: **F 16 B 5/10**

(30) Priority: **24.12.84  US 685935**

(43) Date of publication of application: **30.07.86**
Bulletin 86/31

(84) Designated Contracting States: **CH DE FR GB IT LI SE**

(71) Applicant: **REXNORD INC., 350 N. Sunny Slope,
Brookfield, WI 53005 (US)**

(72) Inventor: **Cosenza, Frank J., 1524 W. Fifth Street, San
Pedro California 90732 (US)**

(74) Representative: **Weydert, Robert et al, Office
Dennemeyer S.à.r.l. 21-25 Allée Scheffer P.O. Box 41,
L-2010 Luxembourg (LU)**

(54) **Fastener.**

(57) The invention provides a quick-release, quarter-turn type, self-locking fastener which secures two or more panels together in a manner which prevents any separation of the panels from occurring when loads are applied to the fastened panels. The fastener has a stud assembly (10) and a receptacle assembly (12). A cam nut (42) within a receptable housing (41) is constructed and arranged with respect to the stud assembly (10) so that the cam nut (42) seeks its own level within the receptacle housing (41) which insures a non-separable relationship between the fastened panels. Further the fastener is constructed to be used in any application requiring a large grip variation where one fastener alone can accomplish the task of many, different length, stud assemblies.

The present invention relates to panel fasteners, and in particular to quarter-turn, quick-release type fasteners which when fastened prevent separation of the panels as a result of loads applied to the panels.

The present invention is a significant advance in the state of the art for fasteners of the quarter-turn type. For decades the quarter-turn panel fastener has provided various industries with a quick-locking and quick release fastener requiring essentially a quarter-turn to both engage and disengage the fastener components. While this type of a fastener was well-received and continues to be used extensively, it has not eliminated problems which occur during the use of the fastener. One such problem is the separation of the fastened panels under vibratory or other normal operating loads. In certain situations even the slightest separation of the panel surfaces from each other will result in gaps which prove detrimental to the system or machine containing the fastened panels. A further problem with such fasteners has been their inability to accommodate a variety of grip sizes, i.e., variations in panel thicknesses. Even the slightest change in the combined thickness of the fastened panels can result in an inoperable quarter-turn fastener as a result of the fastener not being adjustable to accommodate the change in grip size.

Attempts to solve these problems and others have led to much design activity in the industry, but to date the problems remain. If a problem has been solved by a prior art device, generally only a more mechanically complicated design is created for the quarter-turn fastener. Examples of such prior art efforts include the quarter-turn fastener shown and described in U.S. Patent No. 2,878,542 which issued March 24, 1959 to J. M. Summers, et al. A predecessor to that particular quarter-turn fastener is the type shown and described in U.S. Patent No. 2,486,411 which issued November 1, 1949 to O. J. Huelster. While both were admirable attempts to advance the state of the art, problems remained. For example, the Summer's fastener has a relatively complicated construction. The Huelster fastener is even more complicated in its design and will allow the fastened panels to separate under low operating loads. Further,

**0 188 991**

Huelster's device requires a special tool to adjust the components. Although Summer's fastener is a quarter-turn fastener, an unusual procedure is required to engage and release it. Due to normal panel warpage, imperfect panel fits, and occasional debris that settles on and between the panels, in order to engage the Summer's fastener the operator must first rotate the stud portion a minimum of one quarter-turn rotation counterclockwise and then at least one half-turn rotation in the clockwise direction to engage the receptacle.

In view of the known prior art, the present invention is believed to be the next significant advance in the state of the art for quarter-turn type fasteners. Several of the recurring problems of the industry are solved by the present invention and this will be fully appreciated after a reading of the description which follows.

The present invention is a fastener device which secures two panels or the like together in a manner which prevents the panels from separating when loads are applied to either panel. The invention requires more than a quarter-turn but less than a full-turn, to engage and disengage the fastener components.

The invention is a combination of two assemblies, i.e., a stud assembly arranged in a first panel and a receptacle assembly arranged in a second panel.

The stud assembly has a rotatable stud with a head at one end of a shank and a cross-pin or cam-follower at the other end. A coil spring surrounds the shank and is arranged between the head and cross-pin. A grommet having a central through-hole is positioned within the panel opening. A coil spring container surrounds the spring and fits into the grommet through-hole. Together the grommet and spring container serve as a mechanism for stopping the stud head at a pre-determined position.

The receptacle assembly is composed of a cylindrical receptacle housing which is fixed to the second panel and a cam nut which is axially movable within the housing. The cam nut includes a cross-pin capturing portion.

**0 188 991**

The invention is constructed and assembled to be self-locking to achieve a non-separable relationship between the fastened panels. The stud cross-pin is first captured by the cam nut and the cam nut is then moved axially to clamp the fastener components, and accordingly the panels, together in a non-separable manner. To disengage the fastener, a reverse procedure is followed. Regardless of the conditions under which the fastener is used, e.g., debris enters one of the assemblies thus altering the grip size required, the invention remains fully operable. As a result of the construction of the receptacle assembly, the entering stud assembly is first captured by the receptacle assembly before the receptacle cam nut is rotated. In this manner,the fastener seeks the proper locking arrangement of its assembly components regardless of any change in total panel thickness, which might occur while the panels are not fastened such as warpage, debris, etc. As a result, the invention embodies a degree of flexibility which insures its reliability within a relatively large grip range. Because the invention requires more than a single quarter-turn to achieve the non-separable relationship, it is not a quarter-turn fastener but an advance in that particular technology.

These and other features and advantages of the invention over known panel fasteners will be discussed in greater detail hereinafter.

A more thorough understanding of the present invention will be gained by reading the following description of the preferred embodiments with reference to the accompanying drawings in which:

Figure 1 is an exploded view in perspective of the assembly components of a preferred embodiment of the present invention.

Figure 2 is a top plan view of the cam nut of the receptacle assembly of the preferred embodiment shown on Fig. 1.

Figure 3 is a side elevational view in cross-section of the cam nut shown in Fig. 2.

Figure 4 is a bottom plan view of the cam nut shown in Figs. 2 and 3.

Figure 5 is a view in cross-section of the assembled preferred embodiment as it would appear during the fastening procedure.

Figure 6 is a view in cross-section of the preferred embodiment at the conclusion of the fastening procedure illustrating the arrangement of the components when the panels are in a clamped relationship.

Figure 7 is a view in cross-section of the preferred embodiment identical to the invention as shown in Fig. 5 with the exception that the top panel is of significantly greater thickness than that which is shown in Fig. 5.

Figure 8 is a view in cross-section of what is shown in Fig. 7 at the conclusion of the fastening procedure.

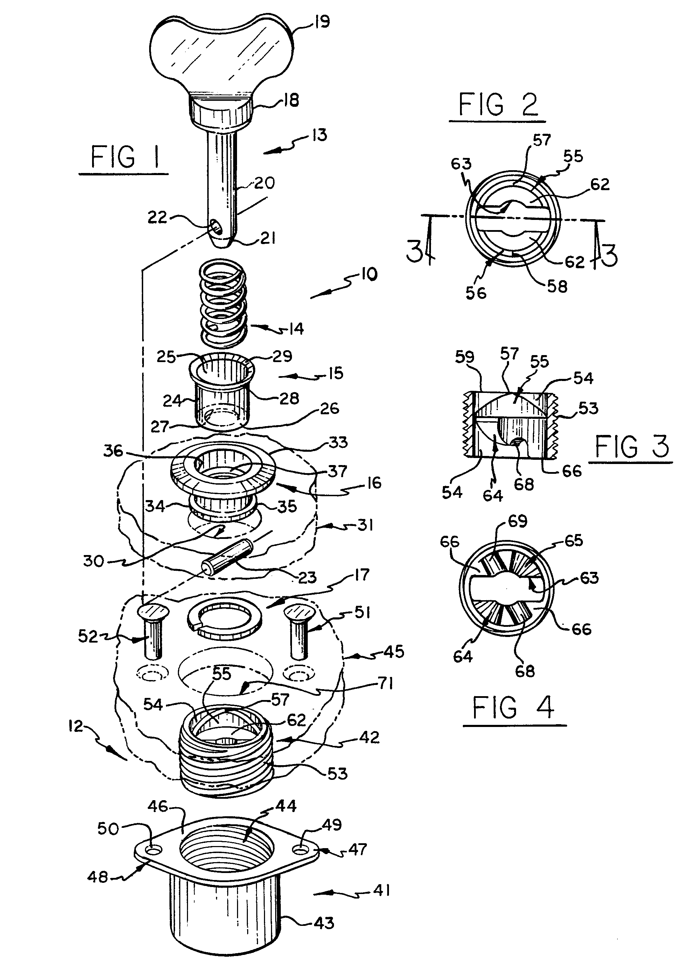

With reference to Figs. 1-4 a preferred embodiment of the present invention fastener will be described. In Fig. 1 the several components of the preferred embodiment are shown in exploded view relationship as they would appear prior to assembly. The invention comprises two assemblies, i.e., a stud assembly 10 which is secured in a first or top panel and a receptacle assembly 12 which is secured in a second or bottom panel.

The stud assembly 10 of the preferred embodiment includes a stud 13, a coil spring 14, a spring cup or container 15, a grommet 16, and a retaining ring 17. The stud 13 is a conventional design and as such has a head 18 with a fixed wing 19 extending upwardly therefrom for the operator's use in rotating the stud, a shank 20 of a pre-selected length, a beveled free-end 21 at the end of the shank 20 opposite the head 18, a through-hole 22 in the shank 20 proximate the free-end 21 and a cam-follower or cross-pin 23 which is of a size allowing it to be secured in the through-hole 22.

A coil spring 14 is selected which has an inner diameter greater than the outside diameter of the stud shank 20. A spring cup or container 15 is provided with an outer wall 24, an inner wall 25, a bottom wall 26 with an opening 27 therein, a top surface 28 having an outer diameter greater than the remaining portion of the cup and an inclined or sloping connecting wall 29 extending between the top surface 28 and the inner wall 25. The inner wall 25 is preferably smooth along its length. The opening 27 in the bottom wall 26 has a diameter greater than the outside diameter of the stud shank 20 but less than the outer diameter of the coil spring 14. The size of the opening 27 is selected to allow unobstructed passage of the stud shank 20 therethrough but to prevent passage of the coil spring 14 and the stud head 18. The cup 15 has a hollow interior defined by the inner wall 25.

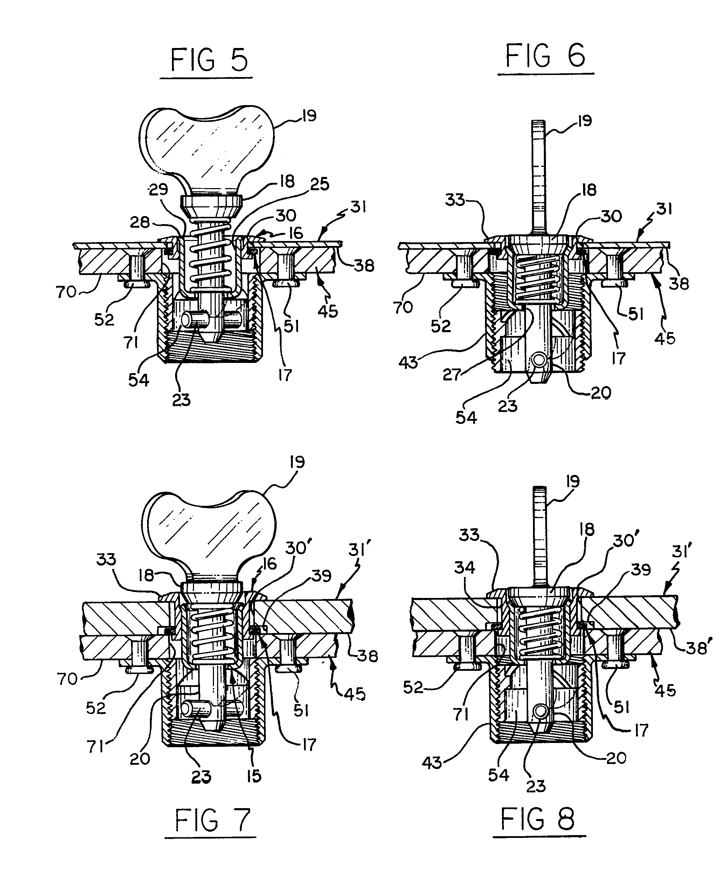

The grommet 16 is constructed for insertion into a prepared opening 30 in a first or top panel 31. The height of the grommet is directly related to the thickness of the panel 31. At a top or first end of the grommet 16, a shoulder or flange 33 is provided and has an outer diameter greater than the diameter of the panel opening 30. Extending downwardly from the underside of the flange 33 is a central body portion defined by a straight outer wall 34. The outside diameter of the central body portion is less than the diameter of the panel opening 30. At the end of the grommet opposite the flange 33 is a second, smaller shoulder or flange 35. The outer diameter of the lower flange 35 is less than the diameter of the panel opening 30 but greater than the outside diameter of the central body portion. The grommet interior is hollow and defined by an inner wall 36 which has a protruding edge or abutment 37 near the lower flange 35 of the grommet. To secure the grommet 16 within the panel opening 30 a retaining ring 17 of conventional split construction is used. The retaining ring 17 has an outer diameter greater than that of the panel opening and the grommet lower flange 35, and an inside diameter which is less than the diameter of the panel opening 30 but greater than the outside diameter of the grommet body portion. In certain applications the surface 30 of the panel 31 which faces the other panel is counterbored to provide a recess 39 of a sufficient size to contain the retaining ring 17 and allow a flush abutment of the two panels when fastened together, as illustrated in Fig. 7.

The receptacle assembly 12 of the preferred embodiment comprises two parts, i.e., a receptacle housing 41 and a cam nut 42. The receptacle housing 41 has a cylindrical body configuration defined by an outer wall 43 and a threaded inner wall 44. The bottom of the housing is preferably left open. The top of the housing 41 in the preferred embodiment is constructed to allow securement of the housing to the second panel 45. In the embodiment shown, a flat surface portion 46 extends outwardly from the upper end of the body and includes a pair of opposing ear portions 47, 48. Each ear portion 47, 48 has an opening 49, 50 respectively therein for the passage of a rivet 51, 52 therethrough which thus secures the receptacle housing 41 to the second panel 45. The housing interior is hollow.

A cam nut 42 is constructed so as to be threadably insertable into the receptacle housing interior. External threads 53 extend along the surface of the outer wall of the nut 42. ˙n the preferred embodiment a high-helix angle thread for the preferred cam nut is shown as a multi-lead thread, e.g., four leads. Those skilled in the art will appreciate that other thread forms are possible which will accomplish the goal of moving the cam nut axially within the threaded receptacle housing quickly with a minimum of rotations.

With reference to Figs. 1-4, the interior of the cam nut 42 may be better appreciated. The cam nut has an inner wall 54. In the upper portion of the cam nut a pair of substantially triangular wall surfaces 55, 56 formed integral with the inner wall are provided. The peak 57, 58 of each respective surface 55, 56 is situated at or near the top edge opening 59 of the cam nut 42. The sloping edge surfaces of the triangular wall surfaces 55, 56 extend from the respective peak downwardly to a top surface 62. The triangular wall surfaces 55, 56 are provided to assist or guide the stud cross-pin 23 in an aligned manner towards and into a centrally located opening 63 within the cam nut 42.

The cam portion of the nut 42 is formed integral with the cam nut inner wall 54. It is situated substantially within the lower portion of the nut interior. As Figs. 3 and 4 illustrate the construction of the cam portion is conventional and includes the top surface 62, the centrally located opening or through-hole 63 having a pair of opposing slot portions for receiving the stud cross-pin 23 and a circular central portion therebetween for accommodating the stud shank 20. A pair of opposing contoured cam surfaces or ramps 64, 65 extend from the top surface 62 towards the bottom surface 66. Each ramp 64, 65 terminates above the bottom surface 66 in a detent 68, 69 respectively which serves as a capturing mechanism for the stud cross-pin 23.

To use the invention the parts of the preferred embodiment are assembled as follows: The grommet 16 is inserted into the first panel opening 30 and the retaining ring 17 is snapped into position above the lower flange 35 and around the wall 34. The spring cup 15 is placed into the grommet 16, the coil spring 14 is then placed within the spring cup 15 and finally the stud shank 20 is inserted through the spring, cup, and grommet arrangement. When the beveled end 21 of the shank extends beyond the bottom of the grommet, the cross-pin is then fixed in the shank opening 22. The stud assembly is thus ready for use.

The receptacle assembly is ready for installation after the cam nut is threaded into the housing interior until the top edge 59 of the cam nut 42 is situated at or slightly below the top surface 46 of the receptacle housing. The receptacle housing 41 prior to assembly with the cam nut 42 is elliptically deformed along the surface 43 sufficiently to provide the desired amount of interference fit between the threaded portions yet allow the cam nut to be rotated for axial movement within the housing. The housing may then be riveted to the underside 70 of the second panel 45 after the prepared opening 71 in the second panel 45 is aligned with the interior of the cam nut 42. The invention is then ready for use. In use the unique functional features of the invention are appreciated. With reference now to Figs. 5-8, these features will be explained. This invention allows two panels to be secured together in a manner which prohibits separation of the panels under normal operating loads and yet provides the user with the quick release features of known quarter-turn fasteners but without the disadvantages of known quarter-turn fasteners.

In Fig. 5 a stud assembly 10 is shown after insertion into its mating receptacle assembly 12. The shank 20 and cross-pin 23 pass in a normal manner through the cam nut opening 63 with the cross-pin 23 coming to rest or being "captured" within the detents 68, 69 after a quarter-turn rotation of the stud head. Prior to this point the cam nut has not been rotated. Only the stud has been rotated approximately ninety-degrees in order to place the cross-pin 23 in the cam detents 68, 69. In Fig. 5 it can be seen that at this point in the fastening procedure the stud head is not yet flush with the grommet top flange 33. The spring cup bottom wall 26 rests upon the top surface 62, but the spring 14 has not as yet been compressed. At this point, the panels may be moved apart because the uncompressed spring will allow the top panel to be drawn upwardly from the lower panel.

To complete the fastening of the panels together such that no gaps between the panels may exist or, in other words, to insure that the fastened panels are inseparable, the operator need only rotate the stud approximately three-eights to three-quarters of a turn. Such rotation compresses the spring, seats the spring cup within the grommet as intended and shown in Fig. 6, and moves the cam nut axially downward within the receptacle housing. From an original starting point in the initial or first use of the fastener, the cam nut in combination with the stud assembly seeks its own level within the receptacle housing which insures a non-separable securement of the panels. The operator knows when this condition has been reached because the head of the stud is preferably constructed to lie flush with the grommet or the panel top surface. The fastener is self-locking and requires no external or additional mechanism to maintain the locked arrangement. With this particular construction the invention is not subject to disengagement as a result of vibration or other loads.

Another significant feature of the invention is the flexibility of a single fastener being usable within a range of grip sizes. The same fastener as shown in Figs. 5 and 6 is also illustrated in Figs. 7 and 8. All parts of the four drawings are identical with two exceptions to illustrate the use of the invention in different grip ranges. Whereas the top panel 31 shown in Figs. 5 and 6 illustrates the use of the invention at one extreme of the grip range for the fastener, the top panel 31' shown in Figs. 7 and 8 illustrates the use of the invention at the other extreme of the grip range. In Figs. 7 and 8 the top panel 31' has a substantially greater thickness than the panel 31. The undersurface 38' of the panel 31' is counterbored at the opening to create the recess 39 described above for the grommet retaining ring 17.

From Figs. 7 and 8 it can be seen that the fastening procedure is identical to that shown and described with respect to Figs. 5 and 6. When the panels are clamped tight (see Fig. 8), the cam nut in this application has moved axially downward a less amount than in the Fig. 6 application as a result of the increased thickness of the top panel 31'. Yet in both applications the end result is the same, the two panels are secured together by the invention and are inseparable as a result of external loads until the fastener is itself separated by the user. The initial engagement of the fastener may require more rotations for the cam nut 42 to seek and achieve its proper level for the panel thickness, especially when the panel thickness is at a minimum for the grip range. However, it must be noted that this is an automatic function of the fastener and thus does not require any additional knowledge on the part of the operator to manipulate this device. Once the fastener is initially automatically set at the proper level, future removals and insertions of the fastener would approach the features of a traditional quarter-turn fastener.

The invention may be reliably reused innumerable times so long as the required grip is within the design range for that particular fastener. In unlocking the fastener the rotation of the stud rotates the cam nut axially upward just until the spring is released from its compressed state. At a predetermined rotational load, the cross pin is freed from the cam detents and any further rotation of the cam nut ceases. At this point the fastener behaves exactly like a traditional quarter-turn type fastener. Depending on how steep the helix angle is for the cam nut, rapid installation or removal may occur at as low as three-eights of a turn or rotation. Thus when the invention must be re-fastened the cam nut is located at a depth within the receptacle housing which provides the necessary clearance for the spring to be compressed sufficiently to rotate the cross-pin along the cam ramps and into the detents where it is captured and held. The cam nut is then able upon further rotation to be returned to the proper level within the receptacle housing which results in the tight securement of the two panels together.

From the foregoing it should now be appreciated that the present invention is a significant advance in the state of the art for fasteners in that it provides the desirable quick release feature of well-known quarter-turn fasteners, but under loads it will not allow the fastened panels to be separated such that gaps exist between the panel surfaces.

The invention is virtually fool proof in that it is usable with a range of grip sizes and the stud cross-pin must be locked within the cam detents before any rotation of the cam nut is possible. As a result the operator cannot inadvertently rotate the cam nut out of the housing. Further, the preferred embodiment offers the industry a low cost, improved simplified design with significantly more advantages as a result.

It must be appreciated that to persons skilled in the art, the preferred embodiment includes structural features which may be modified as a matter of design choice, e.g., the fixed wing may be replaced with a screwdriver slot or other driving recesses in the stud head. Securing the receptacle housing to the second panel need not be done solely by the use of rivets. Thus the invention is not limited to what is shown solely in the preferred embodiment, but is instead limited in its protection only by the claims which follow.

CLAIMS

1.      A device for fastening two panels or the like together in a manner preventing the panels from separating when loads are applied to either of the fastened panels, said device comprising:

a stud assembly adapted for securement to a first panel; and

a receptacle assembly contructed and arranged to receive said stud assembly therein and adapted for securement to a second panel,

said stud assembly including a rotatable stud, a coil spring surrounding a portion of said stud, a grommet constructed and arranged to be secured in an opening in the first panel, means for securing said grommet within the first panel opening, and means for containing said coil spring relative to said grommet;

said receptacle assembly including a receptacle housing adapted for securement to a second panel and having a threaded inner wall, said receptacle assembly also including a cam nut having an outer wall with external threads thereon and an internal cam portion;

said cam nut being constructed and arranged for axial movement within said assembly;

said cam portion having means for capturing said stud when said stud assembly is inserted into said receptacle assembly;

said stud assembly and said receptacle assembly being constructed and arranged with respect to each other to allow axial movement of said cam nut within said receptacle assembly by rotation of said stud subsequent to capture of said stud by said cam portion stud capturing means,

whereby the panels are fastened together in a non-separable relationship by movement of said cam nut in a first axial direction within said receptacle housing, and the panels are unfastened by movement of said cam nut in a second axial direction opposite said first direction.

2.      A device for fastening two panels or like together in a manner preventing the panels from separating when loads are applied to either of the fastened panels, said device comprising:

a stud assembly adapted for securement to a first panel; and

a receptacle assembly constructed and arranged to receive said stud assembly therein and adapted for securement to a second panel.

said stud assembly including a rotatable stud having a shank, a head at one end of said shank, a cross-pin at an opposing end of said shank, a coil spring surrounding said shank and positioned between said head and said cross-pin, a grommet constructed and arranged to be removably secured in an opening in the first panel, said grommet having a central bore therethrough, means for securing said grommet within the first panel opening, and means for containing said coil spring and stopping said stud head at a pre-determined position relative to said grommet;

said receptacle assembly including a cylindrical receptacle housing adapted for securement to a second panel, and having an outer wall and a threaded inner wall, said receptacle assembly also including a cam nut having an outer wall with external threads thereon, and a cam portion formed integral to said outer wall;

said cam nut being constructed and arranged for axial movement within said receptacle assembly;

said cam portion having means for capturing said stud cross-pin when said stud assembly is inserted into said receptacle assembly;

said stud assembly and said receptacle assembly being constructed and arranged with respect to each other to effect axial movement of said cam nut within said receptacle assembly by rotation of said stud subsequent to capture of said cross-pin by said cross-pin capturing means,

whereby the panels are fastened together in a non-separable relationship by movement of said cam nut in a first axial direction within said receptacle housing, and the panels are unfastened by movement of said cam nut in a second axial direction opposite said first direction.

3.     The device of claim 2 wherein said cam nut outer wall threads are high-helix angle threads.

FIG 1

FIG 2

FIG 3

FIG 4

FIG 5

FIG 6

FIG 7

FIG 8

# European Patent Office

**EUROPEAN SEARCH REPORT**

## 0 188 991

EP 85 63 0233

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 011 848 (CAMLOC FASTENER)<br>* page 12, line 14 *<br><br>--- | 1,2 | F 16 B 5/10 |
| Y | DE-C-1 115 081 (ZAHODIAKIN)<br>* figure 3 *<br><br>--- | 1,2 | |
| Y | CH-A- 282 813 (SIMMONS)<br>* figure 1 *<br><br>--- | 1,2 | |
| Y | US-A-2 438 028 (ALLEN)<br>* figure 2 *<br><br>--- | 1-3 | |
| Y | US-A-2 499 574 (DZUS)<br>* figure 1 *<br><br>--- | 1,2 | |
| Y | US-A-2 571 641 (WING)<br>* figure 2 *<br><br>--- | 1,2 | **TECHNICAL FIELDS SEARCHED (Int. Cl.4)**<br><br>F 16 B 5/10 |
| Y | US-A-2 745 162 (ZAHODIAKIN)<br>* figure 2 *<br><br>--- | 1,2 | |
| Y | US-A-2 757 429 (SUMMERS)<br>* figure 2, column 3, lines 70-74 *<br><br>--- | 1-3 | |
| Y | US-A-2 907 418 (HUDSON et al.)<br>* figure 1 *<br><br>--- -/- | 1-3 | |

The present search report has been drawn up for all claims

| Place of search | Date of completion of the search | Examiner |
|---|---|---|
| BERLIN | 02-04-1986 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| Y | US-A-2 922 211 (BOYD) <br> * figure 2 * <br><br> ----- | 1,2 | |

The present search report has been drawn up for all claims

| Place of search | Date of completion of the search | Examiner |
|---|---|---|
| BERLIN | 02-04-1986 | ZAPP E |

TECHNICAL FIELDS SEARCHED (Int. Cl.4)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82